# EUROPÄISCHE PATENTSCHRIFT

(11) **EP 2 300 293 B1**
(45) Veröffentlichungstag und Bekanntmachung des Hinweises auf die Patenterteilung: **16.11.2011**
(21) Anmeldenummer: 09776973.1
(22) Anmeldetag: 06.07.2009
(51) Int. Cl.: B60T 13/66

(54) **BREMSEINRICHTUNG ZUR STEUERUNG DER DRUCKBEAUFSCHLAGUNG EINES BREMSZYLINDERS BEI EINEM PNEUMATISCHEN BREMSSYSTEM**
BRAKE DEVICE FOR CONTROLLING THE PRESSURE APPLIED TO A BRAKE CYLINDER IN A PNEUMATIC BRAKING SYSTEM
DISPOSITIF DE FREINAGE DESTINÉ À COMMANDER LA MISE SOUS PRESSION D'UN CYLINDRE DE FREIN DANS UNE INSTALLATION PNEUMATIQUE DE FREINAGE

(30) Priorität: 11.07.2008 DE 102008032710
(43) Veröffentlichungstag der Anmeldung: 30.03.2011
(73) Patentinhaber: KNORR-BREMSE Systeme für Schienenfahrzeuge GmbH, 80809 München (DE)
(72) Erfinder: ENGLBRECHT, Matthaeus, 81673 München (DE); HERDEN, Marc-Oliver, 81377 München (DE); HELLER, Martin, 85716 Unterschleissheim (DE)
(74) Vertreter: Schönmann, Kurt
(86) Internationale Anmeldenummer: PCT/EP2009/004862
(87) Internationale Veröffentlichungsnummer: WO 2010/003609

(56) Entgegenhaltungen:
- EP-A- 0 453 811
- WO-A-2005/110830
- DE-A1- 2 801 778
- DE-A1- 3 639 388
- DE-A1- 4 309 386
- GB-A- 2 212 572

## Beschreibung

Die vorliegende Erfindung betrifft eine Bremseinrichtung zur Steuerung der Druckbeaufschlagung eines Bremszylinders bei einem pneumatischen Bremssystem, mit einer in einem Ventilgehäuse untergebrachten pneumatischen Vorsteuereinheit für die Betätigung eines Relaisventils zur Aussteuerung des Bremsdrucks, wobei ein dazwischen angeordneter Betätigungskraft übertragender Waagebalken mit Mitteln zur Verschiebung eines Widerlagers in Abhängigkeit vom Lastzustand des Fahrzeuges zusammenwirkt, die bei einer Bremsung - insbesondere Notbremsung - aus hoher Geschwindigkeit das Widerlager kontinuierlich nach Maßgabe einer die maximal zulässige Adhäsion ausnutzenden Bremsdruck-Geschwindigkeit-Kennlinie verschieben.

Das Einsatzgebiet der vorliegenden Erfindung erstreckt sich auf pneumatische Bremssysteme, insbesondere für Schienenfahrzeuge, bei welchen per elektronischer Steuerung ein Übertragungsfaktor zwischen der Bremszylinderanforderung und dem Bremsdruck im Bremszylinder mit einer Lastkorrektur versehen wird. Eingesetzt werden kann die Erfindung aber auch bei Fahrzeugen ohne Lastkorrektur. Um in Abhängigkeit vom Lastzustand des Fahrzeuges eine Bremsung durchzuführen, wird ein diesen repräsentierendes Lastsignal in einen Druckregler eingesteuert, welcher in Abhängigkeit eines elektrischen Bremsdruckanforderungssignals der elektronisch gesteuerten Bremse einen Vorsteuerdruck für die Bremsung erzeugt. Die Bremse ist jedoch meist durchgehend lastkorrigiert und der Regelbereich ist verkürzt.

Aus der DE 10 2004 024 462 A1 geht eine technische Lösung hervor, die den vorstehend geschilderten Nachteil dadurch behebt, dass eine Auswahleinrichtung eine den größeren Vorsteuerdruck entsprechende Kraft auf ein abhängig vom Lastzustand des Fahrzeuges mittels einer Stelleinrichtung übersetzungsveränderbares Getriebe in Form eines Waagebalkens überträgt, welches das Relaisventil betätigt, so dass der ausgesteuerte Bremsdruck entsprechend dem Übersetzungsverhältnis des Getriebes mit dem Lastzustand des Fahrzeuges korrespondiert.

ein anderes ähmliches System wird im Dokument WO 2005/110830 A1 offenbart.

Besondere Erfordernisse ergeben sich im Falle einer Bremsung eines Fahrzeuges aus einer hohen Geschwindigkeit heraus. Um insbesondere den Energieeintrag in eine Bremsscheibe und die Auslösewahrscheinlichkeit des Gleitschutzes bei Bremsungen aus hoher Geschwindigkeit in Schienenfahrzeugen zu reduzieren, wird gewöhnlich der Bremsdruck im Hochgeschwindigkeitsbereich, also meist oberhalb von 200km/h, reduziert. Dies wird als sogenannte Hoch-Niedrig-Abbremsung bezeichnet. Bei noch höheren Geschwindigkeiten kann diese Umschaltung auch in zwei Stufen erfolgen. Die Umschaltung des Bremsdrucks erfolgt über ein sicherheitstechnisch eindeutiges Signal, welches in den meisten Fällen aus dem Gleitschutzgerät des Bremssystems heraus generiert wird, da das Gleitschutzgerät über die notwendige Geschwindigkeit entsprechend der gängigen Einstufung verfügt.

Problematisch hinsichtlich der bisherigen Technik erweisen sich jedoch internationale Standards, welche im vorgenannten Hochgeschwindigkeitsbereich zur Bestimmung eines maximalen Bremsdrucks eine vorgeschaltete maximale Adhäsionsausnutzung vorschreiben. Diese führt unter Einbeziehung des Fahrzeuggewichts zu einer maximal zulässigen Verzögerung (negative Beschleunigung) und damit Bremskraft. Die maximal erlaubte ausnutzbare Adhäsion nimmt ab dem Erreichen des Hochgeschwindigkeitsbereichs linear mit weiter ansteigender Geschwindigkeit ab.

Bislang wird, wie vorstehend geschildert, der Bremsdruck stufenweise umgeschaltet, im Laufe der Bremsung also erhöht, um diese Adhäsionsgrenze nicht zu überschreiten. Hierdurch geht jedoch mögliche Bremskraft, die bis zum Erreichen der Adhäsionsgrenze noch ausnutzbar wäre, verloren.

Es ist daher die Aufgabe der vorliegenden Erfindung, bei einer Bremseinrichtung der gattungsgemäßen Art die Adhäsionsausnutzung für Bremsungen aus hoher Geschwindigkeit zu verbessern.

Die Aufgabe wird ausgehend von einer Bremseinrichtung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass bei einer gattungsgemäßen Bremseinrichtung mit einem über einen Waagebalken betätigten Relaisventil dessen Verschiebung des Widerlagers bei einer Bremsung aus hoher Geschwindigkeit nach Maßgabe einer die maximal zulässige Adhäsion ausnutzenden Bremsdruck-Geschwindigkeit-Kennlinie kontinuierlich erfolgt.

Der Vorteil der erfindungsgemäßen Lösung liegt insbesondere darin, dass sich die bekannte Bremseinrichtung mit dem im Ventilgehäuse integrierten Druckbegrenzungsventil sowie Relaisventil mit der erfindungsgemäßen Ansteuerung in einfacher Weise an eine bessere Ausnutzung der Bremskraft adaptieren lässt. Demzufolge wird die Bremskraft nicht mehr stufenweise bei Erreichen von vordefinierten Grenzgeschwindigkeiten umgeschaltet, sondern es erfolgt im Prinzip eine geschwindigkeitsabhängige Verschiebung des Widerlagers des Waagebalkens und damit eine kontinuierliche Anpassung an die maximal erlaubte und damit ausnutzbare Adhäsion. Dies wird steuerungstechnisch dadurch möglich, dass nach Maßgabe der Bremsdruck-Geschwindigkeit-Kennlinie kontinuierlich sich die Hebelverhältnisse am Waagebalken ändern.

Vorzugsweise ist die Bremsdruck-Geschwindigkeit-Kennlinie in einer mit den Mitteln zur Verschiebung des Widerlagers gekoppelten elektronischen Steuereinheit hinterlegt. Die Steuereinheit liefert ein elektrisches Ansteuersignal zur Betätigung der Mittel zur Verschiebung des Widerlagers.

Gemäß einer ersten Ausführungsform können die Mittel zur Verschiebung des Widerlagers als ein Spindeltrieb mit elektromotorischem Antrieb ausgebildet sein. Zur Ansteuerung dieses elektromotorischen Antriebs zwecks Positionierung des Widerlagers wird vorzugsweise das von der im Rahmen des Bremssystems vorhandenen Gleitschutzeinrichtung bereitgestellte Geschwindigkeitssignal verwendet. Der Vorteil dieser technischen Lösung besteht in erster Linie darin, dass der Mechanismus im Falle eines Ausfalls der elektrischen Verschiebefunktion aufgrund Selbstkennung im letzten Zustand der Beladungsmessung des Fahrzeuges verharrt, so dass es einerseits nicht zum Ausfall der Bremsung und andererseits in den meisten Fällen nicht zur Überbremsung kommen kann.

Gemäß einer zweiten Ausführungsform können die Mittel zur Verschiebung des Widerlagers auch als per Feder rückgestellte pneumatische Zylindereinheit ausgebildet sein. Diese Alternative bedarf zwar Druckluft als Antriebsenergie, diese steht jedoch im Rahmen pneumatischer Bremssysteme zur Verfügung, so dass eine Nutzbarmachung für die Mittel zur Verschiebung des Widerlagers in einfacher Weise möglich ist. Der zur Beaufschlagung der Zylindereinheit erforderliche Steuerdruck wird nach Maßgabe eines EP-Wandlers oder Analogventils bestimmt, dessen elektrische Ansteuerung wiederum unter Nutzung des von der Gleitschutzeinrichtung bereitgestellte Geschwindigkeitssignals erfolgen kann. Der Vorteil dieser technischen Lösung besteht darin, dass bei Ausfall des Steuerdrucks entweder der zuletzt vorgegebene Steuerdruck in der Zylindereinheit eingesperrt bleibt oder das Widerlager in diesem Falle durch Wirkung der rückstellenden Feder auf den minimalen Druckübersetzungszustand des Waagebalkens verfährt, so dass hierdurch die erforderliche Sicherheit gewährleistet ist.

Gemäß einer dritten Ausführungsform wird vorgeschlagen, dass die Mittel zur Verschiebung des Widerlagers nach Art eines elektronisch ansteuerbaren Proportionalmagneten ausgebildet sind. Proportionalmagnete sind Gleichstromhubmagnete mit einem analogen Wege-Stromverhalten, so dass sich hiermit das Widerlager nach Maßgabe der Bestromung proportional verschieben lässt. Bei Ausfall des Steuerstroms kann durch Wirkung einer integrierten Rückstellfeder entweder die höhere oder niedrigere Endlage des Widerlagers eingenommen werden, um die sicherheitstechnische Anforderungen so erfüllen. Zur Ansteuerung des Proportionalmagneten zwecks Positionierung des Widerlagers kann auch hier das von der Gleitschutzeinrichtung bereitgestellte Geschwindigkeitssignal hergenommen werden.

Das Geschwindigkeitssignal geht bei allen vorstehend beschriebenen Ausführungsformen dabei der elektronischen Steuereinheit zu, welche nach Maßgabe der Bremsdruck-Geschwindigkeit-Kennlinie der aktuellen Geschwindigkeit den jeweiligen Bremsdruck zuordnet, welcher eine maximale Adhäsionsausnutzung während der Bremsung, insbesondere Bremsung, gewährleistet. Die Bremsdruck-Geschwindigkeit-Kennlinie kann fahrzeugspezifisch durch Versuche festgelegt werden. Wirken andere variable Einflussfaktoren, wie beispielsweise unterschiedliche Fahrzeugmassen, auf den Bremsvorgang ein, so lassen sich diese beeinflussende Kriterien durch eine Schar von Bremsdruck-Geschwindigkeit-Kennlinien abbilden.

Zur Erleichterung der Verschiebbarkeit des Widerlagers sollte dieses als Wälzlager ausgebildet sein, an dessen Umfang der Schwebebalken zur Anlage kommt. Die Kontaktstelle bildet insoweit den Schwenkpunkt für den Waagebalken. Das Wälzlager ist dabei drehbar an einem im Ventilgehäuse integrierten Verschiebeblock gelagert, welcher wiederum von dem vorstehend exemplarisch beschriebenen Mitteln zur Verschiebung des Widerlagers bewegbar, und damit das Widerlager selbst, bewegbar ist.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine grafische Darstellung einer Bremskraft-Geschwindigkeit-Kennlinie zur maximalen Adhäsionsausnutzung während der Bremsung, und
- Fig.2: eine Bremseinrichtung zur Umsetzung einer gemäß Fig. 1 erfolgenden Ansteuerung des Übersetzungsverhältnisses.

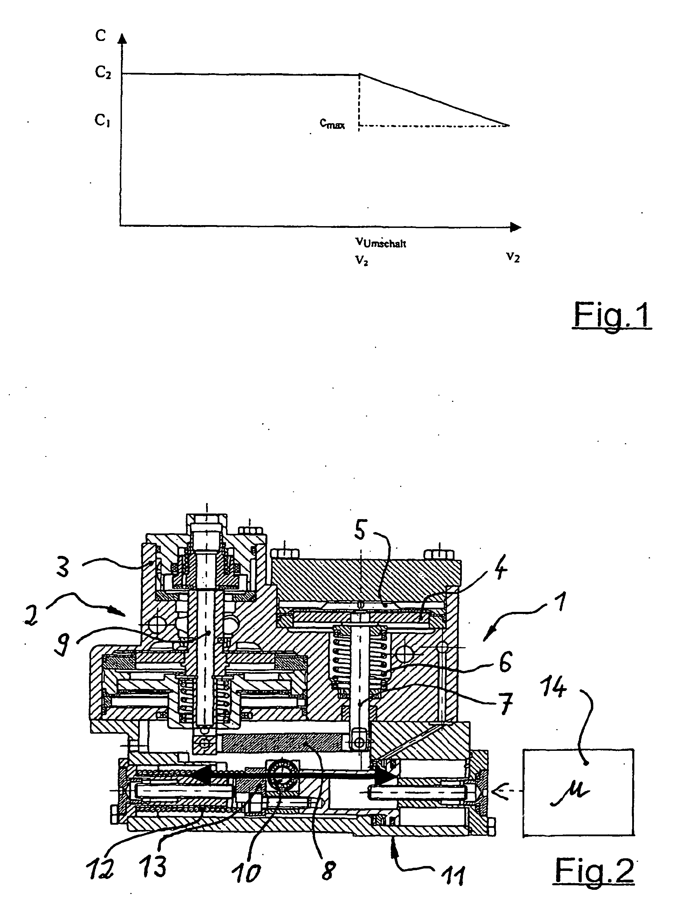

Gemäß Fig. 1 erhöht sich ausgehend von einer Grenzgeschwindigkeit vₘₐₓ > v_{Umschalt} der Bremsdruck C zur Beaufschlagung des Bremszylinders von einem niedrigen Bremsdruck C1 zu einem höheren Bremsdruck C2, um bei niedriger Geschwindigkeit eine höhere Adhäsionsausnutzung zu erreichen und bei höheren Geschwindigkeiten ein unerwünschtes Auslösen des Gleitschutzes zu verhindern. Die Grenzgeschwindigkeit v_{Umschalt} beträgt in diesem Ausfiihrungsbeispiel 200km/h. Allerdings wird ab Erreichen der Grenzgeschwindigkeit v_{Umschalt} der Bremsdruck C2 nicht stufenartig auf den höheren Bremsdruck C2 erhöht (Strichlinie), sondern nach Maßgabe einer maximalen Adhäsionsausnutzung. Insoweit nimmt der Bremsdruck C bis Erreichen der Grenzgeschwindigkeit v_{Umschalt} linear mit weiter ansteigender Geschwindigkeit zu. Denn Standards für internationalen Verkehr schreiben vor, dass eine maximale Adhäsionsausnutzung stattfinden soll, um das Bremsverhalten des Fahrzeugs zu verbessern. Dies führt wie die graphische Darstellung zeigt zu einer maximal zulässigen Bremskraft, welche nicht überschritten werden darf, um damit auch die Adhäsionsgrenze nicht zu überschreiten.

In Fig. 2 ist eine gerätetechnische Umsetzung des vorstehend beschriebenen Erfordernisses bei einer Bremseinrichtung zur Steuerung der Druckbeaufschlagung eines Bremszylinders illustriert. Die Bremseinrichtung umfasst eine pneumatische Vorsteuereinheit 1 sowie ein hierüber betätigtes Relaisventil 2, die beide gemeinsam in demselben Ventilgehäuse 3 untergebracht sind.

Die pneumatische Vorsteuereinheit 1 umfasst eine von einem Kolben 4 begrenzte Vorsteuerkammer 5, die mit einem Vorsteuerdruck von normalerweise 0-3,8 bar, je nach gewünschter Bremswirkung, nach Maßgabe einer Steuerung beaufschlagbar ist. Über einer Rückstellfeder 6 gelangt der Kolben 4 bei fehlendem Vorsteuerdruck in eine definierte Ausgangslage. Die Stellung des Kolbens 4 leitet eine Kolbenstange 7 an ein Ende eines hiermit gelenkig verbundenen Waagebalkens 8 weiter. Der Waagebalken 8 überträgt die von der Vorsteuereinheit 1 erzeugte Betätigungskraft an einen Betätigungsstößel 9 des Relaisventils 2, in dem der Waagebalken 8 durch Anlage an ein Widerlager 10 verschwenkbar ist. Das Relaisventil 2 steuert nach Maßgabe der Betätigungskraft einen Bremsdruck C - in an sich bekannter Weise - aus, mit welchem- ein nicht weiter dargestellt- Bremszylinder beaufschlagt wird.

Das Widerlager 10 ist entlang der Längserstreckung des Waagebalkens 8 verschiebbar (Doppelpfeil), wozu Mittel zur Verschiebung vorhanden sind. Diese Mittel zur Verschiebung des Widerlagers 10 umfassen in diesem Ausführungsbeispiel eine einfachwirkende Kolben-Zylinder- Einheit 11, welche durch eine Feder 12 rückgestellt ist. Bei Beaufschlagung der Kolben- Zylinder- Einheit 11 bewegt sich das drehbar an einem Verschiebeblock 13 angebrachte Widerlager 10, welches hier als Wälzlager ausgebildet ist, in Richtung des Relaisventils 2, so dass sich der linksseitige Hebelarm des Waagebalkens 8 verkürzt. Wird dagegen die Kolben- Zylinder- Einheit 11 wieder entlüftet, bewegt sich der Verschiebeblock 13 durch Kraftwirkung der rückstellenden Feder 12 in Richtung der Vorsteuereinheit 1 sodass sich der linksseitige Hebelarm des Waagebalkens 8 verlängert. Hierüber lässt sich die Betätigungskraft des Relaisventils 2 unabhängig von dem der Vorsteuereinheit 1 vorgegebenen Vorsteuerdruck beeinflussen. Diese Beeinflussung, das heißt das Maß der Beaufschlagung der Kolben- Zylinder- Einheit 11 erfolgt je nach Lastzustand des Fahrzeuges. Eine hohe Belastung des Fahrzeuges, beispielsweise durch entsprechend hohe Zulandung, führt zu einer entsprechend großen Linksverschiebung des Widerlagers 10, um eine kleinere Betätigungskraft für den Betätigungsstößel 9 des Relaisventils 2 zu erzeugen. Somit erofolgt die Bremsung unter Berücksichtigung des aktuellen Lastzustandes des Fahrzeuges.

Bei einer Bremsung aus hoher Geschwindigkeit ab 200 km/h werden die Mittel zur Verschiebung des Widerlagers 10 nach Maßgabe einer maximal zulässigen Adhäsion ausnutzenden Bremsdruck-Geschwindigkeit-Kennlinie gemäß Fig. 1 angesteuert. Die Bremsdruck-Geschwindigkeit-Kennlinie ist in einer den Steuerdruck für die Kolben-Zylinder-Einheit 11 bestimmenden elektronischen Steuereinheit 14 hinterlegt. Die elektronische Steuereinheit 14 verarbeitet zur Ansteuerung der Kolben-Zylinder-Einheit 11 auch das aktuelle von einer -nicht weiter dargestellten- Gleitschutzeinrichtung des Fahrzeuges bereitgestellte aktuelle Geschwindigkeitssignal.

Die Erfindung ist nicht beschränkt auf das vorstehend bevorzugte Ausführungsbeispiel. Es sind vielmehr auch Abwandlungen hiervon denkbar, welche vom Schutzumfang der nachfolgenden Ansprüche mit erfasst sind. So ist es beispielsweise auch möglich, die Mittel zur Verschiebung des Widerlagers 10 anders, beispielsweise nach Art eines elektromotorisch angetriebenen Spindeltriebs oder einen elektrisch ansteuerbaren Proportionalmagneten auszubilden, sofern solche Alternativlösungen die Betriebssicherheit der Bremseinrichtung gewährleisten, indem bei Ausfall der Antriebsenergie das Widerlager in einen definierten Zustand wechselt oder zumindest in der aktuellen Position verharrt.

### Bezugszeichenliste

- 1: Vorsteuereinheit
- 2: Relaisventil
- 3: Ventilgehäuse
- 4: Kolben
- 5: Vorsteuerkammer
- 6: Rückstellfeder
- 7: Kolbenstange
- 8: Waagebalken
- 9: Betätigungsstößel
- 10: Widerlager
- 11: Kolben-Zylinder-Einheit
- 12: Feder
- 13: Verschiebeblock
- 14: Steuereinheit

## Patentansprüche

1. Bremseinrichtung zur Steuerung der Druckbeaufschlagung eines Bremszylinders bei einem pneumatischen Bremssystem, mit einer in einem Ventilgehäuse (3) untergebrachten pneumatischen Vorsteuereinheit (1) für die Betätigung eines Relaisventils (2) zur Aussteuerung des Bremsdrucks (C), wobei ein dazwischen angeordneter betätigungskraftübertragender Waagebalken (8) mit Mitteln zur Verschiebung eines Widerlagers (10) zusammenwirkt,
**dadurch gekennzeichnet, dass** die Mittel zur Verschiebung des Widerlagers (10) bei einer Bremsung aus hoher Geschwindigkeit das Widerlager (10) kontinuierlich nach Maßgabe einer die maximal zulässige Adhäsion ausnutzenden Bremsdruck-Geschwindigkeit-Kennlinie verschieben.

2. Bremseinrichtung nach Anspruch 1,
**dadurch gekennzeichnet, dass** die Bremsdruck-Geschwindigkeit-Kennlinie in einer mit den Mitteln zur Verschiebung des Widerlagers gekoppelten elektronischen Steuereinheit (14) hinterlegt ist.

3. Bremseinrichtung nach Anspruch 1,
**dadurch gekennzeichnet, dass** die Mittel zur Verschiebung des Widerlagers (10) als ein Spindeltrieb mit elektromotorischem Antrieb ausgebildet sind.

4. Bremseinrichtung nach Anspruch 3,
**dadurch gekennzeichnet, dass** zur Ansteuerung des elektromotorischen Antriebs zwecks Positionierung des Widerlagers (10) das von einer Gleitschutzeinrichtung bereitgestellte Geschwindigkeitssignal dient.

5. Bremseinrichtung nach Anspruch 1,
**dadurch gekennzeichnet, dass** die Mittel zur Verschiebung des Widerlagers (10) als per Feder (12) rückgestellte pneumatische Kolben-Zylinder-Einheit (11) ausgebildet sind.

6. Bremseinrichtung nach Anspruch 4,
**dadurch gekennzeichnet, dass** der zur Beaufschlagung der Kolben-Zylinder-Einheit (11) erforderliche Steuerdruck ein Analogventil oder EP-Wandler bestimmt, dessen elektrische Ansteuerung über das von einer Gleitschutzeinrichtung bereitgestellte Geschwindigkeitssignal erfolgt.

7. Bremseinrichtung nach Anspruch 1,
**dadurch gekennzeichnet, dass** die Mittel zur Verschiebung des Widerlagers (10) nach Art eines elektrisch ansteuerbaren Proportionalmagneten ausgebildet sind.

8. Bremseinrichtung nach Anspruch 7,
**dadurch gekennzeichnet, dass** zur Ansteuerung des Proportionalventils zwecks Positionierung des Widerlagers (10) das von einer Gleitschutzeinrichtung bereitgestellte Geschwindigkeitssignal dient.

9. Bremseinrichtung nach Anspruch 1,
**dadurch gekennzeichnet, dass** das Widerlager (10) des Waagebalkens (8) durch ein Wälzlager gebildet ist, an dessen Umfang der Waagebalken (8) zur Anlage kommt, und welches drehbar an einem im Ventilgehäuse (1) integrierten Verschiebeblock (13) gelagert ist.

10. Bremseinrichtung nach Anspruch 1,
**dadurch gekennzeichnet, dass** zur Gewährleistung der Betriebssicherheit die Mittel zur Verschiebung des Widerlagers bei Ausfall der Antriebsenergie in einen definierten Zustand wechseln oder in der aktuellen Position verharren.

11. Bremseinrichtung nach Anspruch 1,
**dadurch gekennzeichnet, dass** elektronischen Steuereinheit (14) die Verschiebung des Widerlagers (10) in Abhängigkeit vom Lastzustand des Fahrzeuges durchführt.

## Claims

1. Brake device for controlling the pressure application to a brake cylinder in a pneumatic braking system, comprising a pneumatic pilot control unit (1) accommodated in a valve housing (3) for the operation of a relay valve (2) for controlling the brake pressure (C), with a balanced beam (8), which is disposed therebetween for the transmission of the force of operation, interacting with means for shifting an abutment (10),
**characterised in that** in the event of brake application at a high speed, said means for shifting said abutment (10) shift said abutment (10) continuously in correspondence with a brake pressure/velocity characteristic that makes use of the maximum adhesion permissible.

2. Brake device according to Claim 1,
**characterised in that** said brake pressure/velocity characteristic is stored in an electronic controller (14) coupled to said means for shifting said abutment.

3. Brake device according to Claim 1,
**characterised in that** said means for shifting said abutment (10) are configured as a spindle drive mechanism including an electromotor driving unit.

4. Brake device according to Claim 3,
**characterised in that** the velocity signal serves to control said electromotor driving unit for positioning said abutment (10), which signal is provided by a antiskid means.

5. Brake device according to Claim 1,
**characterised in that** said means for shifting said abutment (10) are configured as pneumatic piston/cylinder unit (11) reset by means of a spring (12).

6. Brake device according to Claim 4,
**characterised in that** the control pressure required for pressure application to said piston/cylinder unit (11) determines an analog valve or EP converter whose electrical control is realised via said velocity signal provided by an antiskid means.

7. Brake device according to Claim 1,
**characterised in that** said means for shifting said abutment (10) are configured in the manner of an electrically controllable proportional solenoid.

8. Brake device according to Claim 7,
**characterised in that** said velocity signal provided by an antiskid means serves to control said proportional valve for positioning said abutment (10).

9. Brake device according to Claim 1,
**characterised in that** said abutment (10) of said balanced beam (8) is constituted by an antifriction bearing having a periphery against which said balanced beam (8) is brought to bear and which is supported for rotation on a shifting block (13) integrated into said valve housing (1).

10. Brake device according to Claim 1,
**characterised in that** in the event of failure of the driving energy, said means for shifting said abutment change over into a defined state or remain in the current position so as to ensure the operating safety.

11. Brake device according to Claim 1,
**characterised in that** said electronic controller (14) performs the shift of said abutment (10) in response to the load condition of the vehicle.

## Revendications

1. Dispositif de freinage à commander la mise sous pression d'un cylindre de frein dans un système de freinage pneumatique, comprenant une unité de commande pilote pneumatique (1) reçue dans une cage de soupape (3) pour l'actionnement d'une soupape en relais (2) afin de commander la pression de freinage (C), à un traversin d'une balance (8), qui est disposé y entre pour la transmission de l'effort d'actionnement, se trouvant en interaction avec des moyens à déplacer un étai de butée (10),
**caractérisé en ce qu'**au cas de serrage du frein à une grande vitesse, lesdits moyens à déplacer ledit étai de butée (10) déplacent ledit étai de butée (10) en continu en correspondance avec une courbe caractéristique de pression de freinage/vitesse, qui utilise l'adhésion maximale permissible.

2. Dispositif de freinage selon la revendication 1,
**caractérisé en ce que** ladite courbe caractéristique de pression de freinage/vitesse est mise en mémoire dans une unité de commande électronique (14) accouplée auxdits moyens à déplacer ledit étai de butée.

3. Dispositif de freinage selon la revendication 1,
**caractérisé en ce que** lesdits moyens à déplacer ledit étai de butée (10) sont conçu sous forme d'un mécanisme à commande par broche, qui renferme une unité d'entraînement électromotrice.

4. Dispositif de freinage selon la revendication 3,
**caractérisé en ce que** le signal de vitesse sert à commander ladite unité d'entraînement électromotrice afin de positionner ledit étai de butée (10), ce signal étant fourni par un moyen antidérapant.

5. Dispositif de freinage selon la revendication 1,
**caractérisé en ce que** lesdits moyens à déplacer ledit étai de butée (10) sont conçus sous forme d'une unité à piston/cylindre pneumatique (11) remise moyennant d'un ressort (12).

6. Dispositif de freinage selon la revendication 4,
**caractérisé en ce que** la pression de commande, qui est requise pour la mise sous pression de ladite unité à piston/cylindre (11) détermine une soupape analogue ou un convertisseur EP, dont la commande électrique se réalise via ledit signal de vitesse fourni par un moyen antidérapant.

7. Dispositif de freinage selon la revendication 1,
**caractérisé en ce que** lesdits moyens à déplacer ledit étai de butée (10) sont configurés de la manière d'un solénoïde proportionnelle sous commande électrique.

8. Dispositif de freinage selon la revendication 7,
**caractérisé en ce que** ledit signal de vitesse, qui est fourni par un moyen antidérapant, sert à commander ladite soupape proportionnelle afin de positionner ledit étai de butée (10).

9. Dispositif de freinage selon la revendication 1,
**caractérisé en ce que** ledit étai de butée (10) dudit traversin d'une balance (8) est constitué par un palier à roulement ayant une périphérie, contre laquelle ledit traversin d'une balance (8) est porté en appui et qui est appuyé pour la révolution sur un bloque de déplacement (13) intégré dans ladite cage de soupape (1).

10. Dispositif de freinage selon la revendication 1,
**caractérisé en ce qu'**au cas de défaillance de l'énergie d'entraînement, lesdits moyens à déplacer ledit étai de butée changent leur marche dans un état défini ou restent en leur position actuelle afin d'assurer la sécurité en service.

11. Dispositif de freinage selon la revendication 1,
**caractérisé en ce que** ladite unité de commande électronique (14) réalise le déplacement dudit étai de butée (10) en réponse à l'état de charge du véhicule.
